# EUROPÄISCHE PATENTSCHRIFT

(11) **EP 3 679 610 B1**
(45) Veröffentlichungstag und Bekanntmachung des Hinweises auf die Patenterteilung: **22.06.2022**
(21) Anmeldenummer: 18795369.0
(22) Anmeldetag: 22.10.2018
(51) Int. Cl.: H01M 50/116, H01M 50/148, H01M 50/183, H01M 50/186, H01M 50/191, H01M 10/0525

(54) **BATTERIEZELLE UND VERFAHREN ZUM HERSTELLEN EINER SOLCHEN**
BATTERIE CELL AND METHOD FOR PRODUCING IT
PILE ÉLECTROCHIMIQUE ET SON PROCÉDÉ DE FABRICATION

(30) Priorität: 27.10.2017 DE 102017219324
(43) Veröffentlichungstag der Anmeldung: 15.07.2020
(73) Patentinhaber: Robert Bosch GmbH, 70442 Stuttgart (DE); GS Yuasa International Ltd., Kissholn, Minami-ku, Kyoto-shi, Kyoto 601-8520 (JP)
(72) Erfinder: RINGK, Andreas, 96047 Bamberg (DE)
(74) Vertreter: Isarpatent
(86) Internationale Anmeldenummer: PCT/EP2018/078851
(87) Internationale Veröffentlichungsnummer: WO 2019/081409

(56) Entgegenhaltungen:
- EP-A2- 0 035 074
- EP-A2- 0 412 655
- DE-A1-102012 000 819
- US-A- 5 462 820
- US-A1- 2017 256 774

## Beschreibung

Die vorliegende Erfindung betrifft eine Batteriezelle. Die vorliegende Erfindung betrifft insbesondere eine Batteriezelle mit einer verbesserten Abdichtung. Die vorliegende Erfindung betrifft ferner ein Verfahren zum Herstellen einer derartigen Batteriezelle.

### Stand der Technik

Verschiedenste Batterien, wie etwa Lithium-basierte Energiespeicher beziehungsweise Lithium-Ionen-Batterien, sind aus dem heutigen Leben kaum noch wegzudenken. Anwendungsgebiete umfassen neben vollkommen elektrisch angetriebenen Fahrzeugen oder Hybridfahrzeugen ferner elektrische Werkzeuge, elektrische Unterhaltungselektronik, Computer, Mobiltelefone und weitere Anwendungen.

Um eine Gefährdung für die Umwelt zu verhindern und um ein geeignetes und langzeitstabiles Arbeiten der Batterien beziehungsweise entsprechender Batteriezellen ermöglichen zu können, ist es von Wichtigkeit, Zellgehäuse nach außen sicher abzudichten.

JP 2007-142251 beschreibt einen Kondensator, der ein Gehäuse mit einer Dichtplatte aufweist. Durch die Dichtplatte verlaufen externe Anschlüsse. Nachdem der die externen Anschlüsse umgebende Bereich maskiert wurde, wird ein Polysilazan aufgetragen und dieses in Siliziumoxid umgeformt.

Die Veröffentlichung "Silicon and Nitrogen" aus dem European Coatings Journal, Ausgabe 02/2008, beschreibt den positiven Effekt einer gehärteten Beschichtung aus Polysilazan als Schutzschicht. Vorteile umfassen etwa eine schmutzabweisende Wirkung und einen Korrosionsschutz. Beschriebene Anwendungen umfassen etwa Züge oder Felgen für Fahrzeuge.

JP 2010-095666 beschreibt ferner ein Fügeverfahren in der Halbleiterproduktion, bei welchen Polysilazan als Fügemittel verwendet wird. Dabei wird Polysilazan auf einen Fügepartner aufgetragen, die Fügepartner aneinander positioniert und das Polysilazan anschließend zu Siliziumoxid gehärtet.

US 2014/0001654 A1 beschreibt ferner einen Klebstofffilm, der zur Herstellung von Halbleiterelementen eingesetzt wird.

Die EP 0 035 074 A2 betrifft eine galvanische Zelle, welche bei erhöhten Temperaturen aufgrund enthaltener Chemikalien korrodiert. Eine weitere elektrische Speichervorrichtung ist in der US 2017/256774 A1 offenbart. Die DE 10 2012 000819 A1 betrifft einen elektrochemischen Energiespeicher oder Energiewandler mit einem Dichtungsmaterial an bestimmten Teilen davon. Die EP 0 412 655 A2 offenbart elektrische Vorrichtungen mit elektrischen Durchführungen sowie Glas-zu-Metall-Versiegelungen. In der US 5 462 820 A ist eine nicht-wässrige Batterie mit einer Versiegelung umfassend ein Polyolefin-Harz beschrieben.

### Offenbarung der Erfindung

Gegenstand der vorliegenden Erfindung ist eine Batteriezelle, aufweisend ein Gehäuse, welches eine Elektrodenanordnung mit einer Kathode und einer Anode aufnimmt, wobei das Gehäuse eine Durchgangsöffnung aufweist, durch welche ein externer Kontakt zum externen elektrischen Kontaktieren der Anode oder der Kathode verläuft, und wobei ein Dichtmittel zum Abdichten der Durchgangsöffnung vorgesehen ist, wobei ferner das Dichtmittel aus Siliziumoxid geformt ist, wobei das Siliziumoxid zumindest teilweise auf dem Gehäuse vorliegt, die Durchgangsöffnung benachbart zu dem externen Kontakt vollständig überdeckt und den externen Kontakt vollständig zweidimensional umschließt, wobei die Batteriezelle durch ein erfindungsgemäßes, nachstehend beschriebenes Verfahren hergestellt ist.

Eine vorbeschriebene Batteriezelle erlaubt insbesondere ein besonders sicheres und verlässliches Abdichten der Durchgangsöffnung und dadurch ein sicheres und langzeitstabiles Arbeiten der Batteriezelle.

Die vorbeschriebene Batteriezelle umfasst ein Gehäuse, insbesondere ein Zellgehäuse, welches eine Elektrodenanordnung mit einer Kathode und einer Anode aufnimmt. Das Gehäuse kann beispielsweise zumindest teilweise aus einem Metall, wie etwa Aluminium, ausgestaltet sein, um eine ausreichende Stabilität aufzuweisen und ferner gegebenenfalls um zumindest teilweise elektrisch leitfähig zu sein, so dass das Gehäuse etwa elektronisch mit einer der Elektroden, beispielsweise mit der Kathode, verbunden werden kann.

Die Elektrodenanordnung kann ferner grundsätzlich ausgestaltet sein, wie dies für die entsprechende Batteriezelle geeignet ist und dabei grundsätzlich derart, wie es aus dem Stand der Technik etwa für prismatische Batteriezellen bekannt ist. Entsprechend kann die Elektrodenanordnung insbesondere mit einer Anode, einer Kathode und einem zwischen Anode und Kathode angeordneten Separator ausgestaltet sein. Für das nicht beschränkende Beispiel einer Lithium-Ionen-Batterie, kann die Anode beispielsweise umfassen oder ausgestaltet sein aus metallischem Lithium oder aus einem Material, welches Lithiumionen einlagern beziehungsweise interkalieren und wieder auslagern beziehungsweise deinterkalieren kann. Ein derartiges Anodenmaterial kann beispielsweise auf einen Stromableiter aufgebracht, wie etwa aufgerakelt, sein. Beispielhafte Anodenmaterialien umfassen Graphit oder Lithiumtitanat. Die Kathode kann entsprechend, ebenfalls für den rein beispielhaften Fall einer Lithium-Ionen Batterie, beispielhaft Nickel-Mangan-Kobalt-Oxid (NMC) oder Lithium-Cobalt-Oxid (LiCoO₂) aufweisen oder daraus bestehen und ebenfalls auf einen Stromableiter aufgebracht sein. Dabei kann das Kathodenmaterial wie auch das Anodenmaterial gegebenenfalls in einem Binder, wie beispielsweise Polyvinylidenfluorid (PVDF) etwa zusammen mit einem Leitzusatz, wie etwa einer elektrisch leitfähigen Kohlenstoffverbindung, beispielsweise Graphit, vorliegen.

Der Elektrolyt kann ebenfalls in an sich bekannter Weise beispielsweise ein Festkörperelektrolyt sein oder ein Lösungsmittel umfassen, in dem ein oder mehrere elektrisch leitfähige Salze gelöst sind. Beispielsweise können aprotische Lösungsmittel, wie etwa Ethylencarbonat, Propylencarbonat, Dimethylcarbonat oder Diethylcarbonat Verwendung finden. Weiterhin kann als elektrisch leitfähiges Salz Lithiumhexafluorophosphat (LiPF₆) verwendet werden. Beispielsweise kann der Elektrolyt sich in Poren des Separators befinden. Der Separator kann beispielsweise eine insbesondere poröse Kunststofffolie sein, etwa gebildet aus Polypropylen. Alternativ kann der Separator ein Festkörperseparator sein, in den ein Leitsalz eingearbeitet ist.

Der Ableiter wie etwa die Ableiterfolie kann in Abhängigkeit der Polarität in der Batteriezelle gewählt werden. Beispielsweise kann die Ableiterfolie oder können die Ableiterfolien aus Kupfer ausgestaltet sein, wenn die Ableiterfolie beziehungsweise die Elektrodenanordnung als Anode geschaltet ist. Alternativ kann die Ableiterfolie oder können die Ableiterfolien als Kupferfolie vorliegen, wenn der Ableiter beziehungsweise die Elektrodenanordnung als Kathode vorliegt.

Es ist ferner vorgesehen, dass das Gehäuse eine Durchgangsöffnung und damit wenigstens eine Durchgangsöffnung zum insbesondere externen Kontaktieren der Anode oder der Kathode aufweist. Beispielsweise kann es vorgesehen sein, dass nur eine Durchgangsöffnung vorliegt, die wie beschrieben abgedichtet ist, oder dass auch zwei Durchgangsöffnungen zum jeweiligen Kontaktieren von Anode und Kathode vorliegen, die entsprechend abgedichtet sind, ohne den Rahmen der Erfindung zu verlassen. Insbesondere kann die Anode elektrisch leitend durch die Durchgangsöffnung insbesondere extern kontaktiert werden, wohingegen die Kathode mit dem Gehäuse elektrisch leitend verbunden sein kann, wie dies vorstehend angedeutet ist. Dadurch kann etwa eine gewünschte Verschaltung einer Mehrzahl an Batteriezellen ermöglicht werden.

Bei der vorstehend beschriebenen Batteriezelle ist es ferner vorgesehen, dass ein Dichtmittel zum Abdichten der Durchgangsöffnung vorgesehen ist. Ein derartiges Dichtmittel kann insbesondere deshalb von Vorteil sein, da es die Durchgangsöffnung beziehungsweise den Durchtritt des Kontakts abdichtet. Dadurch kann ein Einfluss der äußeren Atmosphäre auf die in dem Zellgehäuse befindliche Elektrodenanordnung, etwa durch Sauerstoff oder Feuchtigkeit, vermieden werden. Darüber hinaus kann es verhindert werden, dass innerhalb des Zellgehäuses befindliche Substanzen, wie etwa ein gegebenenfalls flüssiger Elektrolyt, nach außen treten können. Dadurch kann die Gefährdung der Umwelt durch austretende Stoffe reduziert beziehungsweise vollständig verhindert werden.

Bezüglich des Dichtmittels ist es bei einer hier beschriebenen Batteriezelle vorgesehen, dass dieses aus Siliziumoxid geformt ist, wobei das Siliziumoxid zumindest teilweise auf dem Zellgehäuse vorliegt, die Durchgangsöffnung benachbart zu dem externen Kontakt vollständig überdeckt und den externen Kontakt vollständig zweidimensional umschließt. Insbesondere diese Ausgestaltung kann signifikante Vorteile gegenüber den Lösungen aus dem Stand der Technik bieten.

Denn Siliziumoxid, beispielsweise Siliziumdioxid, welches auch als Glas bezeichnet werden kann, ist äußerst stabil gegenüber Flüssigkeiten und Gasen, welche bei dem Betrieb einer Batteriezelle auftreten. Insbesondere ist die Langzeitstabilität bezüglich einer Barrierefunktion gegenüber Flüssigkeiten, wie etwa Elektrolyt oder Wasser beziehungsweise Feuchtigkeit, und Gasen, wie etwa Sauerstoff vorteilhaft. Diese Barrierefunktion kann dabei in vorteilhafter Weise von dem Dichtmittel selbst hervorgerufen werden. Dadurch ist es ist nicht zwingend notwendig, wenn auch nicht ausgeschlossen, etwa vorhandene Dichtungen, die gemäß dem Stand der Technik beispielsweise aus einem isolierenden Polymer gefertigt sind, wie etwa Polyphenylensulfid (PPS) oder Ethylen-Propylen-Dien-Kautschuk (EPDM) vorzusehen oder diese für eine verbesserte Langzeitstabilität zu behandeln.

Darüber hinaus kann Siliziumoxid durch seine isolierenden Eigenschaften einen Kurzschluss zwischen dem Kontakt und dem Gehäuse verhindern, was das Arbeiten der Batteriezelle besonders sicher und verlässlich gestalten kann.

Ferner zeichnet sich Siliziumoxid durch eine hohe Härte und damit gute mechanische Eigenschaften aus, was auch eine gute mechanische Abdichtung erlauben kann.

Ferner kann dadurch, dass das Dichtmittel beziehungsweise das Siliziumoxid zumindest teilweise auf dem Zellgehäuse vorliegt, die Durchgangsöffnung benachbart zu dem externen Kontakt vollständig überdeckt und den externen Kontakt vollständig zweidimensional umschließt, ein besonders effektives Abdichten ermöglicht werden. Dies soll insbesondere bedeuten, dass das Dichtmittel örtlich den Kontakt kontaktierend neben dem Kontakt vorliegt und so die Durchgangsöffnung benachbart zu dem Kontakt vollständig überdeckt und dabei bis auf das Gehäuse verläuft, und ferner zumindest in einem unteren Bereich den Kontakt berührend umrahmt, also zweidimensional umschließt.

In für den Fachmann ersichtlicher Weise sollte das Dichtmittel dabei derart vorliegen, dass ein elektrisches Kontaktieren des Dichtmittels weiter möglich ist. Beispielsweise kann ein Kopfbereich des Kontakts frei von Dichtmittel bleiben.

Insbesondere durch eine derartige Anordnung des Dichtmittels kann sichergestellt werden, dass keine Lücken zwischen dem Kontakt und dem Gehäuse vorliegen, sondern der Kontakt vielmehr seitlich von dem Dichtmittel vollständig umschlossen ist und ferner die Durchgangsöffnung vollständig abgedichtet wird.

Bezüglich des Siliziumoxids, beschreibt dieser Begriff im Sinne der Erfindung eine Sammelbezeichnung für die Modifikationen der Oxide des Siliziums, beispielsweise des Siliziumdioxids mit der Summenformel SiO₂. Somit sind auch Kettenstrukturen beziehungsweise Netzstrukturen umfasst, welche aus Siliziumoxid aufgebaut sind und beispielsweise der Summenformel SiO₂ genügen.

Vorteilhaft kann das Siliziumoxid erzeugt werden durch den Auftrag eines Polysilazans, welches anschließend zu Siliziumoxid gehärtet wird. Dies wird nachstehend mit Bezug auf das Verfahren im Detail beschrieben. Ein derartiges Vorsehen des Siliziumoxids beziehungsweise des Dichtmittels kann von Vorteil sein, da das Polysilazan meist in flüssiger Form beziehungsweise als Lösung oder Suspension aufgetragen werden kann. Beispielsweise kann der Auftrag erfolgen durch einen auch als Dispenser bezeichneten Spender oder einen sogenannten Retainer. Durch einen Flüssigauftrag kann zum Einen der Auftrag erleichtert werden. Zum anderen kann so sichergestellt werden, dass ein guter Kontakt des Dichtmittels mit dem Gehäuse und dem externen Kontakt vorliegt, so dass der Kontakt effektiv von dem Dichtmittel umschlossen ist und so eine besonders effektive und dichte Abdichtung erfolgen kann.

Bevorzugt kann es vorgesehen sein, dass zusätzlich zu dem Dichtmittel ein Fixiermittel vorgesehen ist, welches den externen Kontakt fixiert. In dieser Ausgestaltung kann eine besonders hohe Langzeitstabilität ermöglicht werden, da es verhindert werden kann, dass etwa durch eine Bewegung des Kontakts das diesen umschließende Dichtmittel beschädigt wird. Ferner kann auf diese Weise ermöglicht werden, dass das Dichtmittel keine den Kontakt fixierende Wirkung aufweisen braucht, sondern vielmehr nur den Dichteffekt bereitstellen kann. Dies kann insbesondere das Aufbringen des Dichtmittels vereinfachen, etwa wenn dieses in flüssiger Form als Polysilazan aufgebracht wird. Denn so kann eine sichere Abdichtung erfolgen beziehungsweise ein effektives Umschließen des Kontakts beziehungsweise Terminals erfolgen, ohne dass der Kontakt vorher fixiert werden müsste.

Bezüglich des Fixiermittels kann es von Vorteil sein, dass dieses ein Polymer, insbesondere einen Klebstoff, umfasst. Dadurch kann auf einfache Weise eine Fixierung des Kontakts erfolgen, ohne mechanische Bauteile einfügen zu müssen. Darüber hinaus kann insbesondere bei einer hier beschriebenen Batteriezelle eine Fixierung des Kontakts durch einen Kunststoff möglich sein, da das Dichtmittel den Kunststoff beziehungsweise das Fixiermittel, etwa wenn das Dichtmittel im Inneren des Zellgehäuses angeordnet ist, vor aggressiven Medien, wie etwa dem Elektrolyt, schützen kann.

Es kann weiterhin von Vorteil sein, dass das Dichtmittel im Inneren des Gehäuses angeordnet ist. In dieser Ausgestaltung kann das Dichtmittel besonders effektiv das Austreten von Elektrolyt verhindern und ferner etwaige vorgesehene Dichtmaterialen, die außerhalb des Dichtmittels weiter vorgesehen sein können, vor dem Einfluss aggressiver Medien schützen. Darüber hinaus ist das Dichtmittel vor mechanischen Einflüssen gut geschützt, da das Dichtmittel selbst durch das Zellgehäuse geschützt wird.

Alternativ oder zusätzlich kann es bevorzugt sein, dass das Dichtmittel am Äußeren des Gehäuses angeordnet ist. In dieser Ausgestaltung kann eine besonders einfache Herstellbarkeit ermöglicht werden, da ein Aufbringen des Dichtmittels, insbesondere als das Aufbringen von Polysilazan mit anschließender Härtung, besonders einfach möglich sein kann.

Es kann vorgesehen sein, dass das Dichtmittel nur im Inneren des Gehäuses angeordnet ist, nur am Äußeren des Gehäuses angeordnet ist oder im Inneren des Gehäuses angeordnet ist und am Äußeren des Gehäuses angeordnet ist.

Hinsichtlich weiterer Vorteile und technischer Merkmale der Batteriezelle wird auf die Beschreibung des Verfahrens zum Herstellen einer Batteriezelle, auf die Figuren und die Figurenbeschreibung verwiesen.

Gegenstand der vorliegenden Erfindung ist ferner ein Verfahren zum Herstellen einer Batteriezelle, wobei ein externer Kontakt zum externen Kontaktieren einer Anode oder einer Kathode durch eine Durchgangsöffnung eines Gehäuses geführt wird und anschließend ein Dichtmittel derart aufgebracht wird, dass das Dichtmittel zumindest teilweise auf dem Gehäuse vorliegt, die Durchgangsöffnung benachbart zu dem externen Kontakt vollständig überdeckt und den externen Kontakt vollständig zweidimensional umschließt, wobei als Dichtmittel Siliziumoxid verwendet wird, das erzeugt wird durch das Härten einer aufgebrachten Schicht aufweisend Polysilazan.

Durch ein derartiges Verfahren lässt sich eine langzeitstabile und sichere Abdichtung der Durchgangsöffnung ermöglichen. Insbesondere durch das Ausbilden eines Dichtmittels aus Siliziumoxid können die vorstehend beschriebenen Effekte ermöglicht werden.

Dabei kann das Siliziumoxid in besonders vorteilhafter Weise aufgebracht werden, indem zunächst ein Polysilazan aufgebracht wird, welches anschließend gehärtet wird zu Siliziumoxid. Dabei kann insbesondere eine wasserbasierte Härtung ablaufen nach dem folgenden Schema, bei dem beispielhaft Perhydropolysilazan gehärtet und unter Wasserabspaltung zu Glas beziehungsweise Siliziumoxid umgewandelt wird:

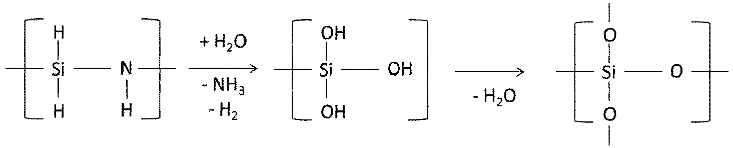

Der Vorgang des Härtens kann grundsätzlich wie aus dem Stand der Technik bekannt erfolgen, insbesondere unter Zusatz von Wasser beziehungsweise Feuchte und/oder unter erhöhten Temperaturen.

Die Verwendung des spezifischen Polysilazans ist grundsätzlich nicht beschränkt. Beispielsweise kann das Polysilazan ausgewählt werden aus der Gruppe bestehend aus Perhydropolysilazan (PHPS), Polymethyl(hydro)silazan (PMS), Polymethyl(hydro)/polydimethylsilazan (PMDMS) und Polymethyl(hydro/polymethylvinylsilazan (PMVS).

Der Vorteil von Polysilazanen ist, dass das daraus erzeugte Dichtmittel eine sehr hohe Härte, beispielsweise eine "Pencil HArdness" von 7H, etwa ermittelbar nach ASTM D3363, beziehungsweise Härtewerte von HV 2000N/Mm², etwa ermittelbar nach DIN EN ISO 6507-1, erreichen kann. Diese Werte liegen deutlich über denen von polymeren Dichtungen, wie etwa Polycarbonat oder Polxmethylmethacrylat, bei denen Härtewerte von etwa HV 100-200 N/mm² erreicht werden.

Ein weiterer Vorteil der Verwendung von Siliziumdioxid über die Vorstufe des Polysilazans kann darin gesehen werden, dass Polysilazane auf einer Vielzahl von Substraten gut haften, wie etwa auf Metallen, Glas, oder Kunststoffen, so dass ein gut haftendes und damit langzeitstabiles Dichtmittel erzeugt werden kann.

Es kann bevorzugt sein, dass eine Oberfläche, auf welche das Polysilazan aufgebracht wird, einer Vorbehandlung unterzogen wird, indem die Oberfläche hydroxyliert wird. Insbesondere in dieser Ausgestaltung kann ein besonders festes Anhaften des Polysilazans an der zu beschichtenden Oberfläche ermöglicht werden, so dass auch die spätere Beschichtung aus Siliziumoxid beziehungsweise das Dichtmittel sicher an der entsprechenden Oberfläche haftet. In dieser Ausgestaltung kann die Langlebigkeit somit besonders hoch sein.

Besonders vorteilhaft kann es vorgesehen sein, dass eine Hydroxylierung erfolgt durch eine Plasmabehandlung. In dieser Ausgestaltung kann unmittelbar die zu beschichtende Oberfläche hydroxyliert beziehungsweise mit OH-Gruppen versehen werden. Dadurch kann auf den weiteren Auftrag von Schichten auf die zu beschichtende Oberfläche verzichtet werden, um OH-Gruppen bereitzustellen. Diese Ausgestaltung ermöglicht somit eine Herstellung mit vergleichsweise wenigen Arbeitsschritten, so dass das Verfahren besonders einfach und insbesondere kostengünstig ausführbar ist. Dabei kann es ermöglicht werden, dass das Plasma die Oberfläche des zu beschichtenden Substrats oxidiert und dabei OH-Gruppen an der Oberfläche ausbildet, an denen das Polysilazan sehr gut haftet.

Dies ist beispielhaft in dem folgenden Schema gezeigt, welches beispielhaft eine kovalente Bindung eines Polysilazans an eine mit Hydroxygruppen ausgestattete Oberfläche zeigt.

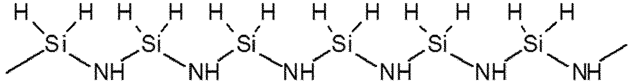

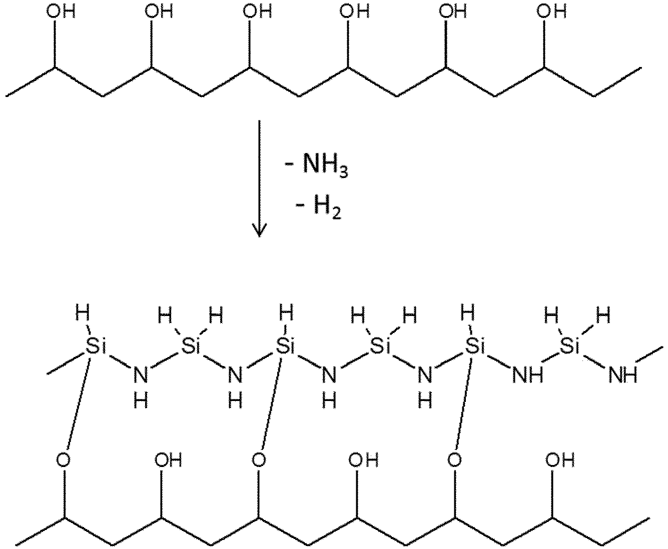

Es kann ferner bevorzugt sein, dass bei einem Aufbringen des Dichtmittels die Durchgangsöffnung in einem Gehäusedeckel vorliegt und der Gehäusedeckel in einem nicht mit einem Gehäusegrundkörper montierten Zustand vorliegt. Diese Ausgestaltung kann besonders einfach durchführbar sein, da der Gehäusedeckel, der noch nicht an dem weiteren Gehäuse, wie etwa einer Gehäusewanne, befestigt ist, zunächst mit dem Dichtmittel versehen werden kann, ohne dass bezüglich der für das Aufbringen des Dichtmittels notwendigen Peripherie Rücksicht auf das restliche Gehäuse genommen werden braucht. Darüber hinaus kann es insbesondere in dieser Ausgestaltung ermöglicht werden, dass das Dichtmittel am Inneren des Gehäuses vorliegt. Weiterhin kann dadurch, dass der Gehäusedeckel vor dem Verbinden mit dem weiteren Gehäuse mit dem Dichtmittel versehen wird, das weitere Verfahren im Wesentlichen ohne Abwandlungen durchgeführt werden, so dass eine besonders einfache Implementierung in bestehende Prozesse möglich ist.

Alternativ kann es bevorzugt sein, dass bei einem Aufbringen des Dichtmittels die Durchgangsöffnung in einem Gehäusedeckel vorliegt und der Gehäusedeckel in einem mit einem Gehäusegrundkörper montierten Zustand vorliegt. In dieser Ausgestaltung kann das Dichtmittel etwa von außen auf das Gehäuse aufgebracht werden. Dies kann somit im Anschluss an das Erzeugen des Gehäuses ermöglicht werden, so dass auch hier eine einfache Implementierung in bestehende Prozesse möglich ist.

Hinsichtlich weiterer Vorteile und technischer Merkmale des Verfahrens zum Herstellen einer Batteriezelle wird auf die Beschreibung der Batteriezelle, auf die Figuren und die Figurenbeschreibung verwiesen.

Weitere Vorteile und vorteilhafte Ausgestaltungen der erfindungsgemäßen Gegenstände werden durch die Figuren veranschaulicht und in der nachfolgenden Beschreibung erläutert, wobei die beschriebenen Merkmale einzeln oder in einer beliebigen Kombination ein Gegenstand der vorliegenden Erfindung sein können, insoweit sich aus dem Kontext nicht eindeutig das Gegenteil ergibt. Dabei ist zu beachten, dass die Figuren nur beschreibenden Charakter haben und nicht dazu gedacht sind, die Erfindung in irgendeiner Form einzuschränken. Es zeigen
- Fig. 1: eine schematische Darstellung eines Verfahrens zur Herstellung einer Batteriezelle gemäß der Erfindung in einer ersten Ausführungsform; und
- Fig. 2: eine schematische Darstellung eines Verfahrens zur Herstellung einer Batteriezelle gemäß der Erfindung in einer zweiten Ausführungsform.

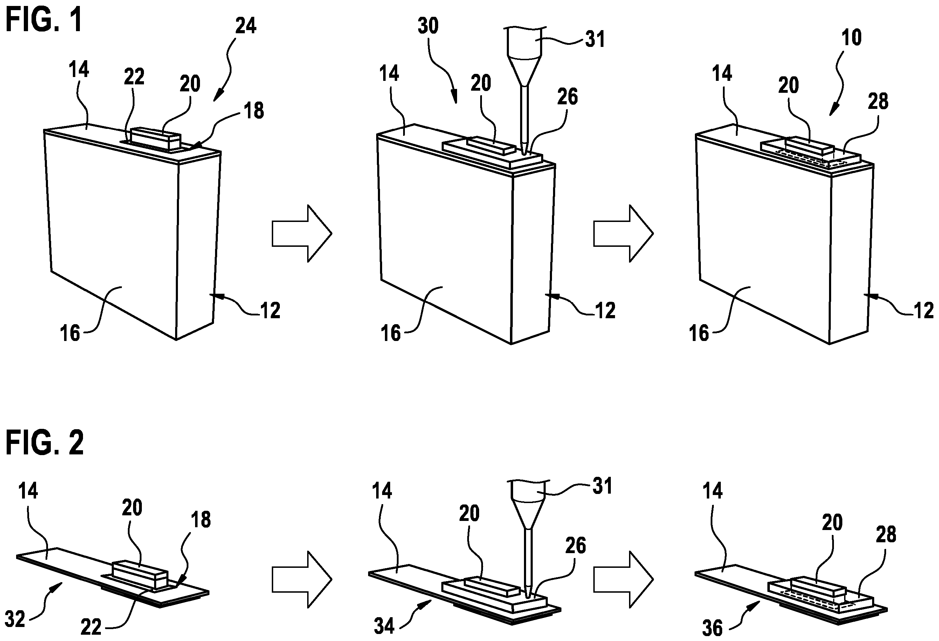

In der Figur 1 ist eine Ausgestaltung eines Verfahrens gezeigt, um eine Batteriezelle 10 gemäß der Erfindung herzustellen. Im Detail zeigt Figur 1, dass die Batteriezelle 10 ein Gehäuse 12, wie insbesondere ein Zellgehäuse, aufweist, welches eine Elektrodenanordnung mit einer Kathode und einer Anode aufnimmt. Das Gehäuse 12 weist in einem Gehäusedeckel 14, der an einem etwa als Gehäusewanne ausgestalteten Gehäusegrundkörper 16 fixiert ist, eine Durchgangsöffnung 18 auf, durch welche ein externer Kontakt 20 zum externen elektrischen Kontaktieren der Anode oder der Kathode verläuft. Somit ist der Kontakt 20 im Inneren des Zellgehäuses 12 mit der Anode oder der Kathode elektrisch verbunden.

Dabei ist ferner gezeigt, dass der Kontakt 20 durch ein aus einem Klebstoff gefertigtes Fixiermittel 22 fixiert wird.

Ausgehend von diesem Zwischenprodukt 24 wird ein weiteres Zwischenprodukt 30 erzeugt, um die Durchgangsöffnung 18 abzudichten. Hierzu wird auf die Durchgangsöffnung 18 und das Gehäuse 12 beziehungsweise den Gehäusedeckel 14 eine Schicht 26 aus Polysilazan aufgetragen derart, dass die Schicht 26 zumindest teilweise auf dem Gehäuse 12 beziehungsweise dem Gehäusedeckel 14 vorliegt, die Durchgangsöffnung 18 benachbart zu dem externen Kontakt 20 vollständig überdeckt und den externen Kontakt 20 zweidimensional vollständig umschließt. Hierzu kann eine geeignete Auftrageinheit 31 verwendet werden und insbesondere die Schicht 26 am Äußeren des Gehäuses 12 aufgebracht werden.

In einem nächsten Schritt wird die Schicht 26 aus Polysilazan wasserbasiert gehärtet, um so das Polysilazan in Siliziumoxid umzuformen. Das Siliziumoxid bilden dann ein Dichtmittel 28, welches zumindest teilweise auf dem Gehäuse 12 beziehungsweise dem Gehäusedeckel 14 vorliegt, die Durchgangsöffnung 18 benachbart zu dem externen Kontakt 20 vollständig überdeckt und den externen Kontakt 20 vollständig umschließt.

Die Figur 1 zeigt dabei eine Ausgestaltung, in der das Dichtmittel 28 aufgebracht wird, nachdem der Gehäusedeckel 14 an dem Gehäusegrundkörper 16 fixiert ist.

Die Figur 2 zeigt eine weitere Ausgestaltung eines Verfahrens zum Herstellen einer Batteriezelle 10, bei der das Dichtmittel 28 aufgebracht wird bei freiliegendem Gehäusedeckel 14, also wenn der Gehäusedeckel 14 noch nicht an dem Gehäusegrundkörper 16 fixiert ist.

Es ist als Zwischenprodukt 32 der Gehäusedeckel 14 gezeigt, der eine Durchgangsöffnung 18 aufweist, durch welche ein externer elektrischer Kontakt 20 zum externen elektrischen Kontaktieren der Anode oder der Kathode verläuft. Dabei ist ferner gezeigt, dass der Kontakt 20 durch ein aus einem Klebstoff gefertigtes Fixiermittel 22 fixiert wird.

Ausgehend von diesem Zwischenprodukt 32 wird ein weiteres Zwischenprodukt 34 erzeugt, um die Durchgangsöffnung 18 abzudichten. Hierzu wird auf die Durchgangsöffnung 18 und den Gehäusedeckel 14 eine Schicht 26 aus Polysilazan aufgetragen derart, dass die Schicht 26 zumindest teilweise auf dem Gehäusedeckel 14 vorliegt, die Durchgangsöffnung 18 benachbart zu dem externen Kontakt 20 vollständig überdeckt und den externen Kontakt 20 zweidimensional vollständig umschließt.

In einem nächsten Schritt wird zur Bildung des Zwischenprodukts 36 die Schicht 26 aus Polysilazan wasserbasiert gehärtet, um so das Polysilazan in Siliziumoxid umzuformen. Das Siliziumoxid bildet dann ein Dichtmittel 28, welches zumindest teilweise auf dem Zellgehäuse 12 beziehungsweise dem Gehäusedeckel 14 vorliegt, die Durchgangsöffnung 18 benachbart zu dem externen Kontakt 20 vollständig überdeckt und den externen Kontakt 20 vollständig umschließt.

Das Zwischenprodukt 36 kann dann an einem Gehäusegrundkörper 16 fixiert werden, um so die Batteriezelle 10 zu erzeugen.

## Patentansprüche

1. Verfahren zum Herstellen einer Batteriezelle (10), wobei ein externer Kontakt (20) zum externen Kontaktieren einer Anode oder einer Kathode durch eine Durchgangsöffnung (18) eines Gehäuses (12) geführt wird und anschließend ein Dichtmittel (28) derart aufgebracht wird, dass das Dichtmittel (28) zumindest teilweise auf dem Gehäuse (12) vorliegt, die Durchgangsöffnung (18) benachbart zu dem externen Kontakt (20) vollständig überdeckt und den externen Kontakt (20) zweidimensional vollständig umschließt, wobei als Dichtmittel (28) Siliziumoxid verwendet wird, das erzeugt wird durch das Härten einer aufgebrachten Schicht (26) umfassend Polysilazan.

2. Verfahren nach Anspruch 1, **dadurch gekennzeichnet, dass** eine Oberfläche, auf welche die Schicht (26) umfassend Polysilazan aufgebracht wird, einer Vorbehandlung unterzogen wird, indem die Oberfläche hydroxyliert wird.

3. Verfahren nach Anspruch 2, **dadurch gekennzeichnet, dass** eine Hydroxylierung erfolgt durch eine Plasmabehandlung.

4. Verfahren nach einem der Ansprüche 1 bis 3, **dadurch gekennzeichnet, dass** bei einem Aufbringen des Dichtmittels (28) die Durchgangsöffnung (18) in einem Gehäusedeckel (14) vorliegt und der Gehäusedeckel (14) in einem nicht mit einem Gehäusegrundkörper (16) montierten Zustand vorliegt.

5. Verfahren nach einem der Ansprüche 1 bis 4, **dadurch gekennzeichnet, dass** bei einem Aufbringen des Dichtmittels (28) die Durchgangsöffnung (18) in einem Gehäusedeckel (14) vorliegt und der Gehäusedeckel (14) in einem mit einem Gehäusegrundkörper (16) montierten Zustand vorliegt.

6. Batteriezelle, aufweisend ein Gehäuse (12), welches eine Elektrodenanordnung mit einer Kathode und einer Anode aufnimmt, wobei das Gehäuse eine Durchgangsöffnung (18) aufweist, durch welche ein externer Kontakt (20) zum externen elektrischen Kontaktieren der Anode oder der Kathode verläuft, und wobei ein Dichtmittel (28) zum Abdichten der Durchgangsöffnung (18) vorgesehen ist, **dadurch gekennzeichnet, dass** das Dichtmittel (28) aus Siliziumoxid geformt ist, wobei das Siliziumoxid zumindest teilweise auf dem Gehäuse (12) vorliegt, die Durchgangsöffnung (18) benachbart zu dem externen Kontakt (20) vollständig überdeckt und den externen Kontakt (20) zweidimensional vollständig umschließt, hergestellt nach einem Verfahren nach einem der Ansprüche 1 bis 5.

7. Batteriezelle nach Anspruch 6, **dadurch gekennzeichnet, dass** zusätzlich zu dem Dichtmittel (28) ein Fixiermittel (22) vorgesehen ist, welches den externen Kontakt (20) fixiert.

8. Batteriezelle nach Anspruch 7, **dadurch gekennzeichnet, dass** das Fixiermittel (20) ein Polymer, insbesondere einen Klebstoff, umfasst.

9. Batteriezelle nach einem der Ansprüche 6 bis 8, **dadurch gekennzeichnet, dass** das Dichtmittel (28) auch im Inneren des Gehäuses (12) angeordnet ist.

10. Batteriezelle nach einem der Ansprüche 6 bis 9, **dadurch gekennzeichnet, dass** das Dichtmittel (28) auch am Äußeren des Gehäuses (12) angeordnet ist.

## Claims

1. Method for producing a battery cell (10), wherein an external contact (20) is guided through a through-opening (18) of a housing (12) to contact an anode or cathode externally, and subsequently a sealant (28) is applied in such a way that the sealant (28) is present on the housing (12) at least in part, fully covers the through-opening (18) adjacent to the external contact (20), and fully two-dimensionally encloses the external contact (20), silicon oxide, produced by curing an applied layer (26) comprising polysilazane, being used as a sealant (28).

2. Method according to claim 1, **characterised in that** a surface to which the layer (26) comprising polysilazane is applied is pretreated by hydroxylating the surface.

3. Method according to claim 2, **characterised in that** hydroxylation takes place by plasma treatment.

4. Method according to any of claims 1 to 3, **characterised in that**, when the sealant (28) is being applied, the through-opening (18) is present in a housing cover (14) and the housing cover (14) is in a state where it is not assembled together with a housing base body (16).

5. Method according to any of claims 1 to 4, **characterised in that**, when the sealant (28) is being applied, the through-opening (18) is present in a housing cover (14) and the housing cover (14) is in a state where it is assembled together with a housing base body (16).

6. Battery cell having a housing (12) which receives an electrode arrangement comprising a cathode and an anode, the housing having a through-opening (18) through which an external contact (20) extends for externally electrically contacting the anode or cathode, and a sealant (28) being provided for sealing the through-opening (18), **characterised in that** the sealant (28) is formed from silicon oxide, the silicon oxide being present on the housing (12) at least in part, fully covering the through-opening (18) adjacent to the external contact (20), and fully two-dimensionally enclosing the external contact (20), produced by a method according to any of claims 1 to 5.

7. Battery cell according to claim 6, **characterised in that** a fixing means (22), which fixes the external contact (20), is provided in addition to the sealant (28).

8. Battery cell according to claim 7, **characterised in that** the fixing means (20) comprises a polymer, in particular an adhesive.

9. Battery cell according to any of claims 6 to 8, **characterised in that** the sealant (28) is also arranged in the interior of the housing (12).

10. Battery cell according to any of claims 6 to 9, **characterised in that** the sealant (28) is also arranged on the exterior of the housing (12).

## Revendications

1. Procédé de fabrication d'une cellule de batterie (10), dans lequel un contact externe (20) pour la mise en contact externe d'une anode ou d'une cathode est guidé à travers une ouverture de passage (18) d'un boîtier (12) et un moyen d'étanchéité (28) est ensuite appliqué de telle sorte que le moyen d'étanchéité (28) est présent au moins partiellement sur le boîtier (12), recouvre complètement l'ouverture de passage (18) au voisinage du contact externe (20) et entoure complètement le contact externe (20) dans deux dimensions, de l'oxyde de silicium étant utilisé comme moyen d'étanchéité (28), lequel est produit par le durcissement d'une couche appliquée (26) comprenant du polysilazane.

2. Procédé selon la revendication 1, **caractérisé en ce qu'**une surface sur laquelle est appliquée la couche (26) comprenant du polysilazane est soumise à un prétraitement par hydroxylation de la surface.

3. Procédé selon la revendication 2, **caractérisé en ce qu'**une hydroxylation est effectuée par un traitement au plasma.

4. Procédé selon l'une des revendications 1 à 3, **caractérisé en ce que**, lors d'une application du moyen d'étanchéité (28), l'ouverture de passage (18) est présente dans un couvercle de boîtier (14) et le couvercle de boîtier (14) est présent dans un état non monté avec un corps de base de boîtier (16).

5. Procédé selon l'une des revendications 1 à 4, **caractérisé en ce que**, lors d'une application du moyen d'étanchéité (28), l'ouverture de passage (18) est présente dans un couvercle de boîtier (14) et le couvercle de boîtier (14) est présent dans un état monté avec un corps de base de boîtier (16).

6. Cellule de batterie présentant un boîtier (12) qui reçoit un agencement d'électrodes comprenant une cathode et une anode, le boîtier présentant une ouverture de passage (18) à travers laquelle passe un contact externe (20) pour la mise en contact électrique externe de l'anode ou de la cathode, et un moyen d'étanchéité (28) étant prévu pour rendre étanche l'ouverture de passage (18), **caractérisée en ce que** le moyen d'étanchéité (28) est formé d'oxyde de silicium, l'oxyde de silicium étant présent au moins partiellement sur le boîtier (12), recouvrant complètement l'ouverture de passage (18) au voisinage du contact externe (20) et entourant complètement le contact externe (20) dans deux dimensions, fabriquée selon un procédé selon l'une des revendications 1 à 5.

7. Cellule de batterie selon la revendication 6, **caractérisée en ce qu'**il est prévu, en plus du moyen d'étanchéité (28), un moyen de fixation (22) qui fixe le contact externe (20).

8. Cellule de batterie selon la revendication 7, **caractérisée en ce que** le moyen de fixation (20) comprend un polymère, en particulier un adhésif.

9. Cellule de batterie selon l'une des revendications 6 à 8, **caractérisée en ce que** le moyen d'étanchéité (28) est également disposé à l'intérieur du boîtier (12).

10. Cellule de batterie selon l'une des revendications 6 à 9, **caractérisée en ce que** le moyen d'étanchéité (28) est également disposé sur l'extérieur du boîtier (12).
